# FASCICULE DE BREVET EUROPEEN

(11) **EP 3 698 115 B1**
(45) Date de publication et mention de la délivrance du brevet: **18.05.2022**
(21) Numéro de dépôt: 18769750.3
(22) Date de dépôt: 24.09.2018
(51) Int. Cl.: G01M 3/20

(54) **DÉTECTEUR DE FUITES POUR LE CONTRÔLE DE L'ÉTANCHÉITÉ D'UN OBJET À TESTER**
LECKDETEKTOR ZUR DICHTIGKEITSKONTROLLE EINES ZU PRÜFENDEN GEGENSTANDES
LEAK DETECTOR FOR CHECKING THE SEALING TIGHTNESS OF AN OBJECT TO BE TESTED

(30) Priorité: 19.10.2017 FR 1759864
(43) Date de publication de la demande: 26.08.2020
(73) Titulaire: Pfeiffer Vacuum, 74000 Annecy (FR)
(72) Inventeur: COULOMB, Julien, 74800 Saint Pierre en Faucigny (FR); NOMINE, Cyrille, 74330 Epagny (FR)
(74) Mandataire: Croonenbroek, Thomas Jakob
(86) Numéro de dépôt international: PCT/EP2018/075823
(87) Numéro de publication internationale: WO 2019/076583

(56) Documents cités:
- DE-A1- 19 962 006
- US-A1- 2016 223 424
- Andrew Chew: "Mechanical Vacuum Pumps", , 31 mai 2006 (2006-05-31), XP055481854, Extrait de l'Internet: URL:https://cas.web.cern.ch/sites/cas.web. cern.ch/files/lectures/platjadaro-2006/che w.pdf [extrait le 2018-06-06]

## Description

La présente invention se rapporte à un détecteur de fuites pour le contrôle de l'étanchéité d'un objet à tester.

Une technique de détection de fuites dite par aspersion consiste à évacuer le gaz à l'intérieur d'un objet à tester jusqu'à une pression faible au moyen d'un détecteur de fuites. On crée ensuite une atmosphère enrichie de gaz traceur autour de l'objet par aspersion. Le détecteur de fuites vérifie si du gaz traceur peut être retrouvé dans les gaz aspirés.

Cette méthode fait appel à la détection du passage du gaz traceur à travers les éventuelles fuites de l'objet à tester. On utilise généralement l'hélium ou l'hydrogène comme gaz traceur car ces gaz traversent les petites fuites plus aisément que les autres gaz, du fait de la petite taille de leurs molécules et de leurs grandes vitesses de déplacement.

Pour descendre la pression dans l'objet à tester, le détecteur de fuites comporte un système de pompage pouvant être composé d'une pompe à vide primaire et d'une pompe à vide turbomoléculaire montée en amont et en série de la pompe à vide primaire. La pompe à vide turbomoléculaire est d'abord isolée de l'objet à tester pour abaisser la pression dans l'objet à tester par la pompe à vide primaire puis mise en communication avec l'objet à tester après que la pression a franchi un seuil bas.

La pression de vide limite atteinte par le système de pompage doit être la plus basse possible afin d'obtenir une bonne sensibilité de mesure. En outre, le débit de pompage de la pompe à vide primaire doit être suffisant pour descendre rapidement en pression à l'intérieur de l'objet à tester et le plus bas possible.

Pour abaisser la pression de vide limite, une solution consiste à utiliser une pompe à vide primaire ayant un nombre plus important d'étages de pompage montés en série. Cette configuration ne permet cependant pas d'améliorer le débit de pompage lors de la mise sous vide.

Pour augmenter le débit de pompage, une solution consiste à raccorder une deuxième pompe à vide primaire en parallèle de la première. Cette solution ne permet toutefois pas d'abaisser la pression de vide limite. Celle-ci peut générer un bruit de fond important, rendant les détections de faibles signaux d'hélium difficiles.

Par ailleurs, les performances de pompage des pompes à vide primaires, notamment celles à membranes, peuvent se dégrader avec leur vieillissement, augmentant les pressions de vide limite atteignables. Cela peut empêcher le franchissement du seuil bas de pression permettant le basculement du pompage sur la pompe à vide turbomoléculaire.

Une solution consiste à utiliser une pompe à vide turbomoléculaire additionnelle, interposée entre la pompe à vide turbomoléculaire principale et la pompe à vide primaire. Cette pompe à vide turbomoléculaire additionnelle est mise en communication avec l'objet à tester dès la mise sous vide de l'objet à la pression atmosphérique. Cette solution peut cependant être relativement onéreuse. De plus, les entrées d'air à répétition devant être absorbées par la pompe à vide turbomoléculaire additionnelle peuvent être des sources de dysfonctionnements.

Le document DE 199 62 006 A1 décrit un détecteur de fuites dont le dispositif de pompage comprend une première pompe à vide primaire, une deuxième pompe à vide primaire et une pompe à vide turbomoléculaire. La première pompe à vide primaire comprend un étage de pompage et la deuxième pompe à vide primaire comprend deux étages de pompage.

Un des buts de la présente invention est de proposer un détecteur de fuites permettant d'atteindre une basse pression de vide limite tout en présentant un débit de pompage important à pression atmosphérique, qui soit robuste dans le temps, avec un coût et un encombrement maitrisés.

A cet effet, l'invention a pour objet un détecteur de fuites pour le contrôle de l'étanchéité d'un objet à tester, le détecteur de fuites comprenant :
- une entrée de détection destinée à être raccordée à un objet à tester,
- un dispositif de pompage comportant :
   - une première pompe à vide primaire comportant un premier moteur d'entrainement, au moins un premier et un deuxième étages de pompage montés en série entre une entrée et un refoulement,
   - au moins une deuxième pompe à vide primaire comportant un deuxième moteur d'entrainement, au moins un premier et un deuxième étages de pompage montés en série entre une entrée et un refoulement, les entrées des pompes à vide primaire étant raccordées en parallèle à l'entrée de détection via une première vanne d'isolation,
   - une pompe à vide turbomoléculaire ayant un refoulement raccordé entre la première vanne d'isolation et les entrées des pompes à vide primaire par une deuxième vanne d'isolation,
- un détecteur de gaz raccordé à la pompe à vide turbomoléculaire,
caractérisé en ce que le refoulement de la au moins une deuxième pompe à vide primaire est raccordé à la première pompe à vide primaire, entre deux étages de pompage en série de la première pompe à vide primaire.

L'idée à la base de l'invention est d'utiliser de façon innovante des pompes à vide primaire classiquement utilisées pour refouler des gaz à pomper à pression ambiante, en raccordant le refoulement d'une des pompes à vide primaire entre des étages de pompage de l'autre. Le raccordement de la deuxième pompe à vide primaire entre les étages de pompage de la première pompe à vide primaire permet de bénéficier à la fois du débit de pompage des premiers étages de pompage des au moins deux pompes à vide primaires et d'un abaissement de la pression de vide limite résultant des étages de pompage de la deuxième pompe à vide et du(es) dernier(s) étage(s) de pompage de la première pompe à vide primaire. En effet, en vide limite, le pompage est effectif à travers les étages de pompage de la deuxième pompe à vide primaire auxquels s'ajoute le au moins un dernier étage de pompage de la première pompe à vide primaire successif(s) au raccordement du refoulement de la deuxième pompe à vide primaire. Cet agencement est contre-intuitif. On aurait plutôt pensé que la pression de vide limite obtenue serait identique à celle obtenue avec une seule pompe à vide primaire.

La pression de vide limite dans l'objet à tester peut donc être abaissée. Cela permet de réduire le bruit de fond en gaz traceur et donc permet une amélioration significative de la sensibilité de mesure.

L'abaissement de la pression de vide limite permet en outre d'obtenir une marge par rapport aux pertes de performances pouvant être induites par le vieillissement des pompes à vide primaires. On obtient donc une meilleure robustesse par rapport au vieillissement des pompes.

Selon une ou plusieurs caractéristiques du détecteur de fuites, prises seules ou en combinaison :
- le refoulement de la au moins une deuxième pompe à vide primaire est raccordé entre l'avant-dernier étage de pompage et le dernier étage de pompage de la première pompe à vide primaire,
- les au moins deux pompes à vide primaire sont à membrane,
- les membranes des étages de pompage de la première pompe à vide primaire sont configurées pour être entrainées en mouvement au moyen du premier moteur d'entrainement et les membranes des étages de pompage de la deuxième pompe à vide primaire sont configurées pour être mises en mouvement au moyen du second moteur d'entrainement,

- les au moins deux pompes à vide primaire sont à vis ou à spirale,
- les au moins deux pompes à vide primaire comportent deux rotors, par exemple de type ROOTS,
- les au moins deux pompes à vide primaire comportent deux rotors configurés pour être entrainés pour tourner de façon synchronisée en sens inverse dans chaque étage de pompage,
- les rotors de la première pompe à vide primaire sont configurés pour être entraînés par le premier moteur d'entrainement, les rotors de la deuxième pompe à vide primaire sont configurés pour être entraînés par le deuxième moteur d'entrainement,
- les au moins deux pompes à vide primaire présentent des configurations d'étages de pompage identiques,
- au moins une pompe à vide primaire comporte au moins deux premiers étages de pompage montés en parallèle,
- au moins une pompe à vide primaire comporte au moins trois étages de pompage montés en série,
- le détecteur de fuites comporte un dispositif de purge configuré pour fournir un gaz de purge entre deux étages de pompage de la deuxième pompe à vide primaire.

D'autres avantages et caractéristiques apparaîtront à la lecture de la description suivante d'un mode de réalisation particulier de l'invention, mais nullement limitatif, ainsi que des dessins annexés sur lesquels :
Figure 1 représente une vue schématique d'un détecteur de fuites selon un premier exemple de réalisation.
Figure 2 représente un graphique montrant la descente en pression dans un objet à tester (en mbar) raccordé au détecteur de fuites, obtenue en fonction du temps (en secondes) pour d'une part, deux pompes à vide primaire à membrane selon l'invention (courbe A) et d'autre part, deux pompes à vide primaire à membrane ayant des entrées communes et des sorties communes (courbe B), pour un pompage à des vitesses de rotation maximales et pour un pompage à des vitesses de rotation réduites.
Figure 3 représente une vue schématique d'un détecteur de fuites selon un autre exemple de réalisation.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

On définit par pompe à vide primaire, une pompe à vide volumétrique, qui aspire, transfère puis refoule un gaz à pomper. En utilisation classique, une pompe à vide primaire est configurée pour pouvoir refouler un gaz à pomper à pression ambiante.

On entend par « en amont », un élément qui est placé avant un autre par rapport au sens de circulation du gaz. A contrario, on entend par « en aval », un élément placé après un autre par rapport au sens de circulation du gaz à pomper, l'élément situé en amont étant à une pression plus basse que l'élément situé en aval.

On définit par « vide limite », la pression minimale obtenue par une pompe à vide lorsqu'aucun flux de gaz n'est introduit, excepté ceux d'éventuels flux de gaz parasites et négligeables.

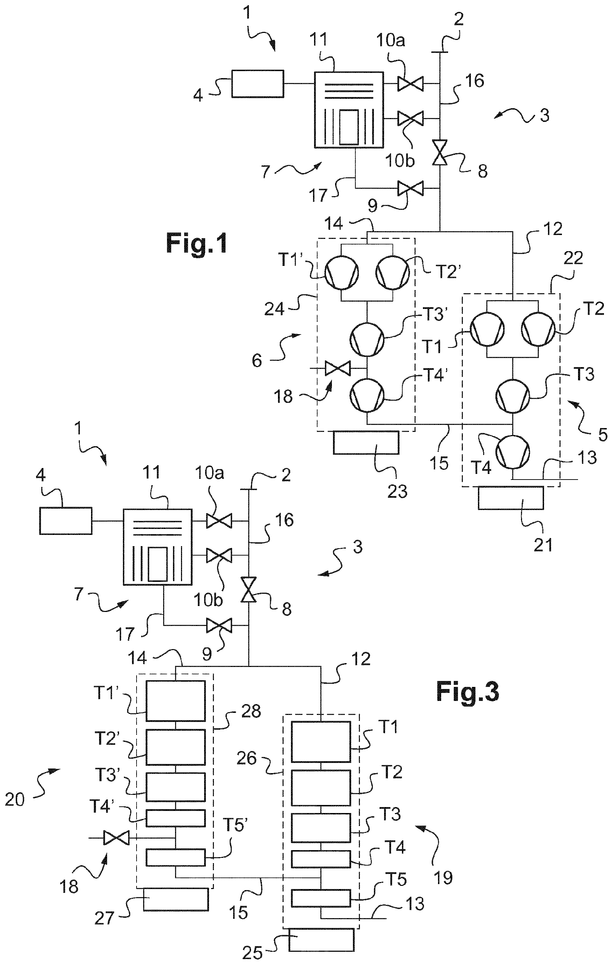

La Figure 1 montre un détecteur de fuites 1 pour le contrôle de l'étanchéité d'un objet à tester tel que par aspersion de gaz traceur.

Le détecteur de fuites 1 comporte une entrée de détection 2 destinée à être raccordée à un objet à tester, un dispositif de pompage 3 et un détecteur de gaz 4.

Le dispositif de pompage 3 comporte une première pompe à vide primaire 5, au moins une deuxième pompe à vide primaire 6, une pompe à vide turbomoléculaire 7, une première et deuxième vannes d'isolation 8, 9 et au moins une vanne de prélèvement 10a, 10b.

Le détecteur de gaz 4 est raccordé à la pompe à vide turbomoléculaire 7, par exemple à son aspiration 11. Le détecteur de gaz 4 comporte par exemple un spectromètre de masse.

Le refoulement 17 de la pompe à vide turbomoléculaire 7 est raccordé aux entrées 12, 14 des pompes à vide primaire 5, 6 via la deuxième vanne d'isolation 9.

L'entrée de détection 2 du détecteur de fuites 1 est par exemple raccordée à un étage intermédiaire de la pompe à vide turbomoléculaire 7, via au moins une vanne de prélèvement 10a, 10b. Le dispositif de pompage 3 comporte par exemple au moins deux vannes de prélèvement 10a, 10b, chaque vanne 10a, 10b étant raccordée à un étage intermédiaire distinct de la pompe à vide turbomoléculaire 7 de manière à pouvoir adapter le flux de prélèvement au niveau du taux de fuites, la vanne de prélèvement 10a, 10b étant raccordée sur une dérivation d'une canalisation de la ligne de vide 16 agencée entre l'entrée de détection 2 et la première vanne d'isolation 8.

La deuxième vanne d'isolation 9 est raccordée à la ligne de vide 16 entre la première vanne d'isolation 8 et les entrées 12, 14 des pompes à vide primaire 5, 6.

La fermeture des vannes de prélèvement 10a, 10b et éventuellement, de la deuxième vanne d'isolation 9, permet le vidage de l'objet à tester raccordé à l'entrée de détection 2 par les pompes à vide primaire 5, 6, lors de l'ouverture de la première vanne d'isolation 8.

La première pompe à vide primaire 5 comporte au moins un premier étage de pompage T1, T2 et un deuxième étage de pompage T3, montés en série les uns à la suite des autres entre une entrée 12 et un refoulement 13 de la première pompe à vide primaire 5 et dans lesquels un gaz à pomper peut circuler. La première pompe à vide primaire 5 comporte un premier moteur d'entrainement 21. Les étages de pompage T1, T2, T3, T4 de la première pompe à vide primaire 5 sont agencés dans un premier carter 22 de la première pompe à vide primaire 5.

La deuxième pompe à vide primaire 6 comporte au moins un premier étage de pompage T1', T2' et un deuxième étage de pompage T3', montés en série les uns à la suite des autres entre une entrée 14 et un refoulement 15 de la deuxième pompe à vide primaire 6 et dans lesquels un gaz à pomper peut circuler. La deuxième pompe à vide primaire 6 comporte un second moteur d'entrainement 23. Les étages de pompage T1', T2', T3', T4' de la seconde pompe à vide primaire 6 sont agencés dans un second carter 24 de la deuxième pompe à vide primaire 6.

Les premier et second moteurs d'entrainement 21, 23 sont indépendants l'un de l'autre.

Chaque étage de pompage T1-T4, T1'-T4' comprend une entrée et une sortie respectives.

Les étages de pompage d'une même pompe à vide primaire peuvent être raccordés en parallèle, les entrées étant raccordées entre elles et les sorties étant raccordées entre elles.

Les étages de pompage d'une même pompe à vide primaire peuvent être raccordées en série les uns à la suite des autres par des canaux inter-étages respectifs raccordant la sortie (ou le refoulement) de l'étage de pompage qui précède ou la sortie commune de plusieurs étages de pompage qui précédent, à l'entrée (ou l'aspiration) de l'étage qui suit ou à l'entrée commune de plusieurs étages de pompage qui suivent.

Les étages de pompage T1-T4, T1'-T4' d'une même pompe à vide primaire présentent un volume engendré, c'est-à-dire un volume de gaz pompé, décroissant (ou égal) avec les étages de pompage montés en série, le(s) premier(s) étage(s) de pompage T1, T2, T1', T2' présentant le débit engendré le plus élevé et le dernier étage de pompage T4, T4' présentant le débit engendré le plus faible.

Dans cet exemple de réalisation, la première pompe à vide primaire 5 comporte deux premiers étages de pompage T1, T2 montés en parallèle. Ces premiers étages de pompage T1, T2 sont montés en série et en amont d'un deuxième étage de pompage T3, monté en série et en amont d'un troisième étage de pompage T4.

La deuxième pompe à vide primaire 6 comporte deux premiers étages de pompage T1', T2' montés en parallèle. Ces deux premiers étages de pompage T1', T2' sont montés en série et en amont d'un deuxième étage de pompage T3', monté en série et en amont d'un troisième étage de pompage T4'.

Les entrées 12, 14 des pompes à vide primaire 5, 6 sont raccordées en parallèle à l'entrée de détection 2 par des canalisations d'une ligne de vide 16 du dispositif de pompage 3, via la première vanne d'isolation 8.

Dans ce premier exemple de réalisation, les pompes à vide primaire 5, 6 sont à membrane. Chaque étage de pompage comporte une membrane entrainée par un excentrique de sorte que le mouvement de la membrane accompagné de clapets d'entrée et de sortie permette le pompage d'un gaz.

Dans la première pompe à vide primaire 5, les excentriques mettant en mouvement les membranes des étages de pompage T1-T4 sont entraînés en rotation par le premier moteur d'entrainement 21.

Dans la deuxième pompe à vide primaire 6, les excentriques mettant en mouvement les membranes des étages de pompage T1-T4' sont entraînés en rotation par le deuxième moteur d'entrainement 23.

Les deux pompes à vide primaire 5, 6 sont deux pompes à vide à membranes présentant des configurations d'étages de pompage identiques : les débits de pompage sont équivalents, chaque pompe à vide primaire présentant trois étages de pompage en série, le premier étage de pompage présentant deux étages de pompage en parallèle.

Le refoulement 15 de la deuxième pompe à vide primaire 6 est raccordé à la première pompe à vide primaire 5, entre deux étages de pompage T3, T4 en série de la première pompe à vide primaire 5, tel qu'entre l'avant-dernier étage de pompage T3 et le dernier étage de pompage T4. Le refoulement 15 est ainsi par exemple raccordé au dernier canal inter-étage de la première pompe à vide primaire 5.

L'idée à la base de l'invention est d'utiliser de façon innovante des pompes à vide primaire classiquement utilisées pour refouler des gaz à pomper à pression ambiante, en raccordant le refoulement d'une des pompes à vide primaire entre des étages de pompage de l'autre. Le raccordement de la deuxième pompe à vide primaire 6 entre les étages de pompage T3, T4 de la première pompe à vide primaire 5 permet de bénéficier à la fois d'un débit de pompage doublé et d'un abaissement de la pression de vide limite. En effet, en vide limite, le pompage est effectif à travers les trois étages de pompage T1'-T4' de la deuxième pompe à vide primaire 6 auxquels s'ajoute le dernier étage de pompage T4 de la première pompe à vide primaire 5. Cet agencement est contre-intuitif. On aurait plutôt pensé que la pression de vide limite obtenue serait identique à celle obtenue avec une seule pompe à vide primaire.

Le détecteur de fuites 1 peut comporter un dispositif de purge 18 configuré pour fournir un gaz de purge entre deux étages de pompage T3', T4' de la deuxième pompe à vide primaire 6, tel qu'entre l'avant-dernier étage de pompage T3' et le dernier étage de pompage T4'. Ainsi, un seul dispositif de purge 18 permet de purger à la fois le dernier étage de pompage T4' de la deuxième pompe à vide primaire 6 et le dernier étage de pompage T4 de la première pompe à vide primaire 5.

Un capteur de pression peut être agencé dans la ligne de vide 16 pour mesurer la pression dans les canalisations mettant en communication la au moins une vanne de prélèvement 10a, 10b, les vannes d'isolation 8, 9 et l'entrée de détection 2.

Les vannes d'isolation 8, 9 et de prélèvement 10a, 10b sont par exemple des électrovannes pilotables par une unité de contrôle du détecteur de fuites 1. L'unité de contrôle du détecteur de fuites 1 comporte un ou plusieurs contrôleurs ou microcontrôleurs ou ordinateurs, comportant des mémoires et programmes adaptés pour piloter les électrovannes 8, 9, 10a, 10b, notamment en fonction de la pression mesurée dans la ligne de vide 16, et pour gérer une interface utilisateur du détecteur de fuites 1, telle qu'une télécommande et/ou un panneau de contrôle.

Nous allons maintenant décrire un exemple d'utilisation du détecteur de fuites 1.

On considère initialement que l'objet à tester est raccordé à l'entrée de détection 2 et que les vannes d'isolation 8, 9 et de prélèvement 10a, 10b sont fermées. L'utilisateur lance un cycle de mesure.

La première vanne d'isolation 8 interposée entre l'entrée de détection 2 et les entrées 12, 14 des pompes à vide primaire 5, 6 s'ouvre.

Le détecteur de fuites 1 bénéficie alors du débit de pompage des deux pompes à vide primaire 5, 6, équivalent à quatre étages de pompage T1, T2, T1', T2' aspirant en parallèle dans l'objet à tester.

La pression décroit rapidement dans la ligne de vide 16.

Lorsque la pression mesurée dans la ligne de vide 16 devient inférieure ou égale à un seuil de basse pression, par exemple inférieur ou égal à 500Pa (ou 5mbar), la première vanne d'isolation 8 est commandée en fermeture. La deuxième vanne d'isolation 9 ainsi que de l'une des électrovannes de prélèvement 10a, 10b sont commandées en ouverture afin de mettre la pompe à vide turbomoléculaire 7 et le détecteur de gaz 4 en communication avec l'entrée du détecteur 2.

Le détecteur de fuites 1 bénéficie alors du débit de pompage des deux pompes à vide primaire 5, 6 équivalent à cinq étages de pompage T1', T2', T3', T4', T4 en série.

L'utilisateur peut faire une recherche de fuites en aspergeant du gaz traceur autour de l'objet à tester. Le détecteur de gaz 4 mesure une augmentation en gaz traceur en présence d'une fuite de l'objet à tester.

Le détecteur de fuites 1 peut également être utilisé pour réaliser un contrôle d'étanchéité d'un objet à tester par le test dit « de reniflage ». Pour cela, l'objet à tester est préalablement rempli en gaz traceur, par exemple pressurisé. Une sonde de reniflage est raccordée à l'entrée de détection 2 du détecteur de fuites 1 pour aspirer les gaz environnants l'objet à tester. Une partie des gaz ainsi prélevés, contenant éventuellement le gaz traceur révélateur d'une fuite, est alors analysée par le détecteur de gaz 4.

Lorsque le détecteur de fuites 1 n'est plus utilisé, par exemple au-delà d'une durée prédéfinie, on peut prévoir un mode de veille (ou « stand-by » en anglais) dans lequel on réduit la vitesse de rotation des pompes à vide primaire 5, 6. La diminution de la vitesse de rotation des pompes à vide primaire 5, 6 permet de réduire la consommation électrique du détecteur de fuites 1 en période d'inutilisation. Ce mode peut être déclenché manuellement ou peut être détecté et contrôlé par l'unité de contrôle.

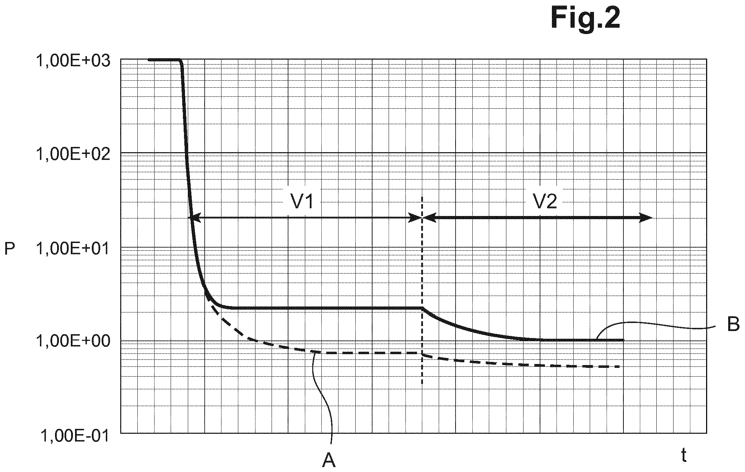

Les avantages apportés par l'invention peuvent être mieux compris en visualisant le graphique de la Figure 2 qui illustre les performances de pompage obtenues d'une part, pour deux pompes à vide primaire 5, 6 à membrane telles que celles décrites précédemment avec le refoulement 15 de la deuxième pompe à vide primaire 6 raccordé entre l'avant dernier étage de pompage T3 et le dernier étage de pompage T4 de la première pompe à vide primaire 5 (courbe A) et d'autre part, pour deux pompes à vide primaire à membrane en utilisation classique ayant des entrées communes et des refoulements communs (courbe B).

Les courbes A, B montrent une descente en pression dans un objet à tester en fonction du temps pour d'une part, un pompage obtenu à des vitesses de rotation maximale V1 des pompes à vide primaires et d'autre part, pour un pompage obtenu à des vitesses de rotation réduites V2 (de l'ordre de 8 à 9% de la vitesse de rotation maximale).

On constate dans cet exemple que, pour les pressions élevées, au-dessus de 3mbar, le débit de pompage est le même pour les pompes à vide primaire 5, 6 selon l'invention que pour deux pompes à vide primaire montées en parallèle avec un refoulement commun. Le détecteur de fuites 1 selon l'invention bénéficie donc du débit de pompage des premiers étages de pompage T1, T2, T1', T2' des deux pompes à vide primaire 5, 6. Le raccordement du refoulement 15 de la deuxième pompe à vide primaire 6 entre l'avant-dernier étage de pompage T3 et le dernier étage de pompage T4 de la première pompe à vide primaire 5 n'abaisse pas les performances de pompage des deux pompes à vide primaires 5, 6 pour les pressions hautes.

En vide limite, on constate que la pression obtenue avec les pompes à vide primaire 5, 6 à vitesse maximale V1 selon l'invention atteint 0,7mbar alors que la pression se stabilise autour de 2,2mbar avec des pompes à vide primaire ayant un refoulement commun. La pression de vide limite est donc abaissée d'un facteur trois environ.

En vitesse de rotation réduite V2, la pression de vide limite obtenue avec les pompes à vide primaire 5, 6 selon l'invention atteint 0,5mbar alors que la pression se stabilise autour d'une pression de vide limite de l'ordre de 1mbar avec des pompes à vide primaire ayant un refoulement commun. La pression de vide limite peut donc être abaissée d'un facteur deux.

La pression de vide limite dans l'objet à tester peut donc être abaissée. Cela permet de réduire le bruit de fond en gaz traceur et donc permet une amélioration significative de la sensibilité de mesure.

L'abaissement de la pression de vide limite permet en outre d'obtenir une marge par rapport aux pertes de performances pouvant être induites par le vieillissement des pompes à vide primaires 5, 6. On obtient donc une meilleure robustesse par rapport au vieillissement des pompes.

La Figure 3 illustre un autre mode de réalisation dans lequel la première et la deuxième pompe à vide primaire 19, 20 comportent deux rotors entrainés pour tourner de façon synchronisée en sens inverse dans chaque étage de pompage T1-T2, T1'-T2'. Les pompes à vide primaire 19, 20 comportent par exemple cinq étages de pompage montés en série. Dans la première pompe à vide primaire 19, les arbres portant les rotors s'étendent dans les étages de pompage T1-T5 montés en série les uns à la suite des autres. Ils sont entraînés par un premier moteur d'entrainement 25 de la première pompe à vide primaire 19. En outre, les étages de pompage T1-T5 sont agencés dans un premier carter 26 de la première pompe à vide primaire 19.

Dans la deuxième pompe à vide primaire 20, les arbres portant les rotors s'étendent dans les étages de pompage T1 '-T5' montés en série les uns à la suite des autres. Ils sont entraînés par un second moteur d'entrainement 27 de la deuxième pompe à vide primaire 20. En outre, les étages de pompage T1'-T5' sont agencés dans un deuxième carter 28 de la deuxième pompe à vide primaire 20.

Les rotors présentent par exemple des lobes de profils identiques, tels que de type « Roots » (section en forme de « huit » ou de « haricot »). Les rotors sont angulairement décalés et entrainés pour tourner de façon synchronisée en sens inverse dans chaque étage. Lors de la rotation, le gaz aspiré depuis l'aspiration est emprisonné dans le volume engendré par les rotors et le stator, puis est entraîné par les rotors vers l'étage suivant. Ces pompes à vide primaires sont dites « sèches » car en fonctionnement, les rotors tournent à l'intérieur du stator sans aucun contact mécanique avec le stator, ce qui permet l'absence totale d'huile dans les étages de pompage.

Comme dans le mode de réalisation précédent, le refoulement 15 de la deuxième pompe à vide primaire 20 est raccordé à la première pompe à vide primaire 19, entre deux étages de pompage T4, T5 en série de la première pompe à vide primaire 19, tel qu'entre l'avant-dernier étage de pompage T4 et le dernier étage de pompage T5.

Le raccordement de la deuxième pompe à vide primaire 20 entre les étages de pompage T4, T5 de la première pompe à vide primaire 19 permet de bénéficier à la fois d'un débit de pompage doublé et d'un abaissement de la pression de vide limite. En vide limite, le pompage est effectif à travers les cinq étages de pompage T1'-T5' de la deuxième pompe à vide primaire 20 auxquels s'ajoute le dernier étage de pompage T5 de la première pompe à vide primaire 19.

L'invention s'applique également à d'autres types de pompes à vide primaire multi-étagées comportant deux rotors, telles que de type « Claw » ou d'un principe similaire de pompe à vide volumétrique, tel qu'une pompe à vide à spirale (appelée « Scroll » en anglais) ou à vis.

## Revendications

1. Détecteur de fuites (1) pour le contrôle de l'étanchéité d'un objet à tester, le détecteur de fuites (1) comprenant :
- une entrée de détection (2) destinée à être raccordée à un objet à tester,
- un dispositif de pompage (3) comportant :
- une première pompe à vide primaire (5 ; 19) comportant un premier moteur d'entrainement (21, 25), au moins un premier étage de pompage (T1, T2) et un deuxième étage de pompage (T3) montés en série entre une entrée (12) et un refoulement (13),
- au moins une deuxième pompe à vide primaire (6 ; 20) comportant un deuxième moteur d'entrainement (23, 27), au moins un premier étage de pompage (T1', T2') et un deuxième étage de pompage (T3') montés en série entre une entrée (14) et un refoulement (15), les entrées (12, 14) des pompes à vide primaire (5, 6; 19, 20) étant raccordées en parallèle à l'entrée de détection (2) via une première vanne d'isolation (8),
- une pompe à vide turbomoléculaire (7) ayant un refoulement (17) raccordé entre la première vanne d'isolation (8) et les entrées (12, 14) des pompes à vide primaire (5, 6; 19, 20) par une deuxième vanne d'isolation (9),
- un détecteur de gaz (4) raccordé à la pompe à vide turbomoléculaire (7),
**caractérisé en ce que** le refoulement (15) de la au moins une deuxième pompe à vide primaire (6 ; 20) est raccordé à la première pompe à vide primaire (5 ; 19), entre deux étages de pompage (T3, T4 ; T4, T5) en série de la première pompe à vide primaire (5 ; 19).

2. Détecteur de fuites (1) selon la revendication précédente, **caractérisé en ce que** le refoulement (15) de la au moins une deuxième pompe à vide primaire (6) est raccordé entre l'avant-dernier étage de pompage (T3 ; T4) et le dernier étage de pompage (T4 ; T5) de la première pompe à vide primaire (5 ; 19).

3. Détecteur de fuites (1) selon l'une des revendications précédentes, **caractérisé en ce que** les au moins deux pompes à vide primaire (5, 6) sont à membrane, les membranes des étages de pompage (T1-T4) de la première pompe à vide primaire (5) étant configurées pour être entrainées en mouvement au moyen du premier moteur d'entrainement (21), les membranes des étages de pompage (T1-T4') de la deuxième pompe à vide primaire (6) étant configurées pour être mises en mouvement au moyen du second moteur d'entrainement (23).

4. Détecteur de fuites (1) selon l'une des revendications 1 ou 2, **caractérisé en ce que** les au moins deux pompes à vide primaire (19, 20) comportent deux rotors configurés pour être entrainés pour tourner de façon synchronisée en sens inverse dans chaque étage de pompage (T1'-T5', T1-T5), les rotors de la première pompe à vide primaire (19) étant configurés pour être entraînés par le premier moteur d'entrainement (25), les rotors de la deuxième pompe à vide primaire (20) étant configurés pour être entraînés par le deuxième moteur d'entrainement (27).

5. Détecteur de fuites (1) selon la revendication précédente, **caractérisé en ce que** les rotors sont de type ROOTS.

6. Détecteur de fuites (1) selon l'une des revendications 1, 2 ou 4, **caractérisé en ce que** les au moins deux pompes à vide primaire sont à vis ou à spirale.

7. Détecteur de fuites (1) selon l'une des revendications précédentes, **caractérisé en ce que** les au moins deux pompes à vide primaire (5, 6; 19, 20) présentent des configurations d'étages de pompage identiques.

8. Détecteur de fuites (1) selon l'une des revendications précédentes, **caractérisé en ce qu'**au moins une pompe à vide primaire (5, 6 ; 19, 20) comporte au moins deux premiers étages de pompage (T1, T2 ; T1', T2') montés en parallèle.

9. Détecteur de fuites (1) selon l'une des revendications précédentes, **caractérisé en ce qu'**au moins une pompe à vide primaire (5, 6) comporte au moins trois étages de pompage (T1-T4, T1'-T4') montés en série.

10. Détecteur de fuites (1) selon l'une des revendications précédentes, **caractérisé en ce qu'**il comporte un dispositif de purge (18) configuré pour fournir un gaz de purge entre deux étages de pompage (T3', T4' ; T4', T5') de la deuxième pompe à vide primaire (6 ; 20).

## Patentansprüche

1. Leckdetektor (1) zur Kontrolle der Dichtigkeit eines zu prüfenden Gegenstands, wobei der Leckdetektor (1) umfasst:
- einen Detektionseingang (2), der dazu bestimmt ist, an einen zu prüfenden Gegenstand angeschlossen zu werden,
- eine Pumpvorrichtung (3), welche aufweist:
- eine erste Primärvakuumpumpe (5; 19), die einen ersten Antriebsmotor (21, 25) und wenigstens eine erste Pumpstufe (T1, T2) und eine zweite Pumpstufe (T3), die zwischen einem Einlass (12) und einem Auslass (13) in Reihe geschaltet sind, aufweist,
- wenigstens eine zweite Primärvakuumpumpe (6; 20), die einen zweiten Antriebsmotor (23, 27) und wenigstens eine erste Pumpstufe (T1', T2') und eine zweite Pumpstufe (T3'), die zwischen einem Einlass (14) und einem Auslass (15) in Reihe geschaltet sind, aufweist, wobei die Einlässe (12, 14) der Primärvakuumpumpen (5, 6; 19, 20) über ein erstes Absperrventil (8) zum Detektionseingang (2) parallelgeschaltet sind,
- eine Turbomolekular-Vakuumpumpe (7), die einen Auslass (17) aufweist, der über ein zweites Absperrventil (9) zwischen dem ersten Absperrventil (8) und den Einlässen (12, 14) der Primärvakuumpumpen (5, 6; 19, 20) angeschlossen ist,
- einen Gasdetektor (4), der an die Turbomolekular-Vakuumpumpe (7) angeschlossen ist,
**dadurch gekennzeichnet, dass** der Auslass (15) der wenigstens einen zweiten Primärvakuumpumpe (6; 20) an die erste Primärvakuumpumpe (5; 19) zwischen zwei in Reihe geschalteten Pumpstufen (T3, T4; T4, T5) der ersten Primärvakuumpumpe (5; 19) angeschlossen ist.

2. Leckdetektor (1) nach dem vorhergehenden Anspruch, **dadurch gekennzeichnet, dass** der Auslass (15) der wenigstens einen zweiten Primärvakuumpumpe (6) zwischen der vorletzten Pumpstufe (T3; T4) und der letzten Pumpstufe (T4; T5) der ersten Primärvakuumpumpe (5; 19) angeschlossen ist.

3. Leckdetektor (1) nach einem der vorhergehenden Ansprüche, **dadurch gekennzeichnet, dass** die wenigstens zwei Primärvakuumpumpen (5, 6) Membranpumpen sind, wobei die Membranen der Pumpstufen (T1-T4) der ersten Primärvakuumpumpe (5) dafür ausgelegt sind, mittels des ersten Antriebsmotors (21) in Bewegung versetzt zu werden, und die Membranen der Pumpstufen (T1'-T4') der zweiten Primärvakuumpumpe (6) dafür ausgelegt sind, mittels des zweiten Antriebsmotors (23) in Bewegung versetzt zu werden.

4. Leckdetektor (1) nach einem der Ansprüche 1 oder 2, **dadurch gekennzeichnet, dass** die wenigstens zwei Primärvakuumpumpen (19, 20) zwei Rotoren aufweisen, die dafür ausgelegt sind, so angetrieben zu werden, dass sie sich in jeder Pumpstufe (T1'-T5', T1-T5) synchron gegenläufig drehen, wobei die Rotoren der ersten Primärvakuumpumpe (19) dafür ausgelegt sind, vom ersten Antriebsmotor (25) angetrieben zu werden, und die Rotoren der zweiten Primärvakuumpumpe (20) dafür ausgelegt sind, vom zweiten Antriebsmotor (27) angetrieben zu werden.

5. Leckdetektor (1) nach dem vorhergehenden Anspruch, **dadurch gekennzeichnet, dass** die Rotoren vom Typ Roots sind.

6. Leckdetektor (1) nach einem der Ansprüche 1, 2 oder 4, **dadurch gekennzeichnet, dass** die wenigstens zwei Primärvakuumpumpen Schneckenpumpen oder Spiralpumpen sind.

7. Leckdetektor (1) nach einem der vorhergehenden Ansprüche, **dadurch gekennzeichnet, dass** die wenigstens zwei Primärvakuumpumpen (5, 6; 19, 20) identische Konfigurationen von Pumpstufen aufweisen.

8. Leckdetektor (1) nach einem der vorhergehenden Ansprüche, **dadurch gekennzeichnet, dass** wenigstens eine Primärvakuumpumpe (5, 6; 19, 20) wenigstens zwei erste Pumpstufen (T1, T2; T1', T2') aufweist, die parallelgeschaltet sind.

9. Leckdetektor (1) nach einem der vorhergehenden Ansprüche, **dadurch gekennzeichnet, dass** wenigstens eine Primärvakuumpumpe (5, 6) wenigstens drei Pumpstufen (T1-T4, T1'-T4') aufweist, die in Reihe geschaltet sind.

10. Leckdetektor (1) nach einem der vorhergehenden Ansprüche, **dadurch gekennzeichnet, dass** er eine Spülvorrichtung (18) aufweist, die dafür ausgelegt ist, ein Spülgas zwischen zwei Pumpstufen (T3', T4'; T4', T5') der zweiten Primärvakuumpumpe (6; 20) zu liefern.

## Claims

1. Leak detector (1) for checking the sealing tightness of an object to be tested, the leak detector (1) comprising:
- a detection inlet (2) for connecting to an object to be tested,
- a pumping device (3) including:
- a first rough vacuum pump (5; 19) including a first drive motor (21, 25), at least one first pumping stage (T1, T2) and one second pumping stage (T3) mounted in series between an inlet (12) and an outlet (13),
- at least one second rough vacuum pump (6; 20) including a second drive motor (23, 27), at least one first pumping stage (T1', T2') and one second pumping stage (T3') mounted in series between an inlet (14) and an outlet (15), the inlets (12, 14) of the rough vacuum pumps (5, 6; 19, 20) being connected in parallel to the detection inlet (2) by means of a first isolation valve (8),
- a turbomolecular vacuum pump (7) having an outlet (17) connected between the first isolation valve (8) and the inlets (12, 14) of the rough vacuum pumps (5, 6; 19, 20) by means of a second isolation valve (9),
- a gas detector (4) connected to the turbomolecular vacuum pump (7),
**characterized in that** the outlet (15) of the at least one second rough vacuum pump (6; 20) is connected to the first rough vacuum pump (5; 19), between two in-series pumping stages (T3, T4; T4, T5) of the first rough vacuum pump (5; 19).

2. Leak detector (1) according to the previous claim, **characterized in that** the outlet (15) of the at least one second rough vacuum pump (6) is connected between the penultimate pumping stage (T3; T4) and the last pumping stage (T4; T5) of the first rough vacuum pump (5; 19).

3. Leak detector (1) according to one of the previous claims, **characterized in that** the at least two rough vacuum pumps (5, 6) are diaphragm pumps, the diaphragms of the pumping stages (T1-T4) of the first rough vacuum pump (5) being configured to be moved by means of the first drive motor (21) and the diaphragms of the pumping stages (T1'-T4') of the second rough vacuum pump (6) being configured to be moved by means of the second drive motor (23).

4. Leak detector (1) according to Claim 1 or 2, **characterized in that** the at least two rough vacuum pumps (19, 20) include two rotors configured to be driven so that they rotate in a synchronized manner in opposite directions in each pumping stage (T1'-T5', T1-T5), the rotors of the first rough vacuum pump (19) being configured to be driven by the first drive motor (25) and the rotors of the second rough vacuum pump (20) being configured to be driven by the second drive motor (27) .

5. Leak detector (1) according to the previous claim, **characterized in that** the rotors are Roots rotors.

6. Leak detector (1) according to one of Claims 1, 2 and 4, **characterized in that** the at least two rough vacuum pumps are screw pumps or scroll pumps.

7. Leak detector (1) according to one of the previous claims, **characterized in that** the at least two rough vacuum pumps (5, 6; 19, 20) have identical pumping stage configurations.

8. Leak detector (1) according to one of the previous claims, **characterized in that** at least one rough vacuum pump (5, 6; 19, 20) includes at least two first pumping stages (T1, T2; T1', T2') mounted in parallel.

9. Leak detector (1) according to one of the previous claims, **characterized in that** at least one rough vacuum pump (5, 6) includes at least three pumping stages (T1-T4; T1'-T4') mounted in series.

10. Leak detector (1) according to one of the previous claims, **characterized in that** it includes a purge device (18) configured to supply a purge gas between two pumping stages (T3', T4'; T4', T5') of the second rough vacuum pump (6; 20).
